Europäisches Patentamt

European Patent Office

Office européen des brevets

(19)

(11) Veröffentlichungsnummer : **0 187 170**
**B1**

(12) **EUROPÄISCHE PATENTSCHRIFT**

(45) Veröffentlichungstag der Patentschrift :
07.09.88

(51) Int. Cl.⁴ : **B 62 K 3/02**

(21) Anmeldenummer : 84116441.1

(22) Anmeldetag : 28.12.84

(54) Fahrrad.

(43) Veröffentlichungstag der Anmeldung :
16.07.86 Patentblatt 86/29

(45) Bekanntmachung des Hinweises auf die Patenterteilung : 07.09.88 Patentblatt 88/36

(84) Benannte Vertragsstaaten :
AT BE CH DE FR GB IT LI LU NL SE

(56) Entgegenhaltungen :
EP-A- 0 079 616
EP-A- 0 104 108
FR-A- 2 473 978
NL-A- 6 715 889
US-A- 4 230 332

(73) Patentinhaber : DÜRKOPP SYSTEM TECHNIK GMBH
August-Bebel-Strasse 133-135
D-4800 Bielefeld 1 (DE)

(72) Erfinder : Die Erfinder haben auf ihre Nennung verzichtet

(74) Vertreter : Patentanwälte TER MEER - MÜLLER - STEINMEISTER
Mauerkircherstrasse 45
D-8000 München 80 (DE)

## Beschreibung

Die Erfindung betrifft ein Fahrrad mit einem Fahrradrahmen, identischem Vorder- und Hinterrad, einer mit dem Fahrradrahmen drehbar verbundenen Vorderradhalterung zur drehbaren Lagerung einer vorderen Achse, auf die ein Vorderrad aufsetzbar ist, einem mit dem Fahrradrahmen verbundenen einarmigen Antriebsausleger, der an seinem hinteren Ende eine mit ihm fest verbundene und drehbar gelagerte sowie mittels einer Antriebseinrichtung antreibbare Hinterradachse aufweist, auf die von einer Seite her das Hinterrad aufsetzbar ist, sowie mit einer Bremsvorrichtung.

Ein derartiges Fahrrad ist bereits aus dem Dokument EP-A-0 079 616 bekannt. Es besitzt eine Vorderradgabel mit zwei kurzen Gabelrohren, in die Gabelzinken einsteckbar sind. Am unteren Ende der Gabelzinken sind Lagereinrichtungen zur Aufnahme einer Vorderradachse vorgesehen. Mit dieser Vorderradachse ist ein Vorderrad verbindbar, welches zwischen den Gabelzinken positioniert ist. Die Vorderradachse trägt darüber hinaus eine Bremseinrichtung, die aus einer auf der Vorderradachse angeordneten Bremsscheibe und weiteren Bremseinrichtungen besteht, die mit wenigstens einem Gabelzinken in Verbindung stehen.

Die Montage bzw. der Austausch eines solchen Vorderrades erfordert relativ viel Zeit, da die gesamte Rad-Achs-Bremskombination zunächst aus der Gabel herausgenommen werden muß, damit das Rad von der Achse gelöst werden kann. Hierbei besteht außerdem die Gefahr, daß die Bremseinrichtung beschädigt wird. Sie liegt ferner permanent frei, so daß sie auch leicht verschmutzen kann. Dies trifft auch für das Hinterrad zu.

Die Vorderradgabel besteht weiterhin aus drei Teilen, deren Herstellung relativ aufwendig ist. Ferner sind zur Montage der Vorderradgabel zusätzliche Arbeitsgänge nötig.

Bei dem bekannten Fahrrad können die Räder identisch sein. Dies trifft jedoch nicht für die Achsen bzw. Achslagereinrichtungen zu, da die Hinterradachse einseitig am Antriebsausleger und die Vorderradachse an beiden Enden mit Hilfe der Gabelzinken gelagert ist. Durch die unterschiedlichen Achslagereinrichtungen erhöht sich der Herstellungs- sowie Montageaufwand des Fahrrades, wodurch höhere Kosten entstehen.

Der Erfindung liegt die Aufgabe zugrunde, ein Fahrrad der eingangs genannten Art so weiterzubilden, daß bei gleichzeitiger Erhöhung der Bremssicherheit und Verringerung des Fahrradgewichts der Herstellungs- und Montageprozeß vereinfacht wird.

Diese Aufgabe wird dadurch gelöst, daß die mit dem Fahrradrahmen verbundene Vorderradhalterung als einholmige Gabel ausgebildet ist, die Vorderradachse fest und zur einseitigen Aufnahme des Vorderrades mit der einholmigen Gabel verbunden ist, die Räder halbschalenförmig ausgebildete und zu den Achslagereinrichtungen hin offene Radnaben besitzen, und daß wenigstens innerhalb einer halbschalenförmigen Radnabe eine mit der Achslagereinrichtung fest verbundene Bremsvorrichtung angeordnet ist, welche zum Bremsen des Fahrrades an die innere Umfangsfläche der Radnabe andrückbar ist.

Durch die einholmige Vorderradgabel, die vorzugsweise eine Verbundkonstruktion ist, wird der Herstellungs- und Montageprozeß des Fahrrades erheblich vereinfacht. So besteht die einholmige Vorderradgabel nur noch aus einem Teil, und nicht mehr aus drei Teilen. Darüberhinaus kann das Vorderrad in sehr einfacher Weise montiert werden, ohne daß es erforderlich ist, dabei die Achse und die Bremseinrichtung von der einholmigen Vorderradgabel zu lösen. Die Gefahr der Beschädigung der Bremseinrichtung wird daher erheblich reduziert.

Durch die halbschalenförmig ausgebildete Radnabe wird ferner erreicht, daß die Bremseinrichtung auch während des Betriebs das Fahrrades sicher vor äußeren Einflüssen geschützt ist, beispielsweise gegen Verschmutzung oder mechanische Beschädigung. Die Bremssicherheit des Fahrrades wird dadurch wesentlich erhöht.

Nach einer vorteilhaften Weiterbildung der Erfindung besitzen die Radnaben eine axiale Öffnung zum Aufstecken der Räder auf einen Achsansatz, wobei die Räder jeweils mittels nur einer axial in die Radachse eindrehbaren Schraube gesichert sind. Dabei können Achsansatz und axiale Öffnung vielkantig oder zusätzlich noch konisch ausgebildet sein. Hierdurch wird erreicht, daß sich die Montage beider Räder erheblich vereinfacht, da pro Rad nur noch eine einzige Schraube zu betätigen ist. Ein Radwechsel kann daher in sehr kurzer Zeit durchgeführt werden, ohne daß der Ausbau einer Achse bzw. Bremsvorrichtung, insbesondere am Vorderrad, notwendig ist. Ferner wird eine sichere Verbindung zwischen den Rädern und den jeweiligen Radachsen erhalten. Nach einer anderen vorteilhaften Weiterbildung der Erfindung, sind in den Radnaben beider Räder Bremsvorrichtungen angeordnet, wodurch die Bremssicherheit des Fahrrades weiter erhöht wird.

Die Achslagereinrichtungen und Bremsvorrichtungen für Vorder- und Hinterrad sind vorzugsweise identisch ausgebildet, so daß der Herstellungsprozeß des Fahrrades vereinfacht wird. Ferner wird hierdurch erreicht, daß Vorder- und Hinterrad miteinander vertauscht werden können.

Jeweils eine Achslagereinrichtung besteht vorteilhaft aus einem rohrförmigen Element, in dessen Inneren eine Radachse über wenigstens zwei Kugellagerringe drehbar gelagert ist. Das rohrförmige Element (Radlagernabe) ist an seinem äußeren Umfang über eine radiale Flanschscheibe mit der Vorderradhalterung bzw. dem Antriebsausleger verbunden, wobei die Bremsvorrichtung an der dem Rad zugewandten Seite der Flanschscheibe angeordnet ist. Diese Achslagereinrichtung zeichnet sich durch große Kompaktheit und Robustheit aus.

Die Bremsvorrichtung besitzt vorzugsweise zwei halbkreisförmige und in Form eines Kreises angeordnete Bremselemente, eine parallel zur Radachse verlaufende erste Achse, die mit der radialen Flanschscheibe fest verbunden ist, wobei die Bremselemente mit ihren Enden auf der ersten Achse drehbar gelagert sind, eine im gegenüberliegenden Endbereich der Bremselemente und zwischen diesen angeordnete zweite, parallel zur Radachse liegende Drehachse, die einen asymmetrischen Querschnitt besitzt, und einen über einen Seilzug betätigbaren Hebel, der mit der zweiten Drehachse fest verbunden ist, um die Bremselemente entgegen einer Federkraft durch Drehung der zweiten Drehachse zu spreizen. Der Seilzug für die Vorderradbremse verläuft dabei vorzugsweise im Innern der einholmigen Gabel.

Eine derartige Bremsvorrichtung besitzt den Vorteil, daß sie sehr dicht um die Radachse herum angeordnet werden kann, und daß kein äußerer Hebelarm zum Abfangen des Bremsmomentes nötig ist, der üblicherweise am Gabelzinken befestigt wird. Die Bremsvorrichtung läßt sich vielmehr vollständig innerhalb der Radnabe anordnen. Sie ist mit der radialen Flanschscheibe fest verbunden und wird von der halbschalenförmig ausgebildeten Radnabe überdeckt. Diese kann mit dem Rad von der Radachse gelöst werden, ohne daß die Bremsvorrichtung demontiert werden muß.

Nach einer anderen vorteilhaften Weiterbildung besteht die Bremsvorrichtung aus einer hydraulischen Bremseinrichtung, die ebenfalls innerhalb der Radnabe angeordnet ist. Die Betätigungselemente, z. B. Druckleitungen, können dabei im Inneren der einholmigen Gabel bzw. des Antriebsauslegers verlaufen.

Nach einer vorteilhaften weiteren Ausbildung der Erfindung besteht die einholmige Gabel aus einem im Radachsenbereich leicht abgebogenen Stahlrohr, an dessen unterem Ende ein Stahlzylinder angeschweißt ist, um dessen Zylinderachse sich das Vorderrad dreht. Diese Konstruktion dient als Grundelement für die einholmige Gabel und besitzt durch den leicht abgebogenen Stahlrohrbereich federnde Eigenschaften. Der Stahlzylinder dient zur Aufnahme einer Achslagereinrichtung, die vorzugsweise aus gegossenem Aluminium besteht. Durch diese Verbundkonstruktion ist eine relativ leichte und doch stabile einholmige Vorderradgabel herstellbar.

Vorteilhafterweise kann das Stahlrohr zusätzlich mit einem Aluminiummantel umgeben sein, der an gegenüberliegenden Rohrseiten in T-förmige Ansatzstücke übergeht. Hierdurch läßt sich die Stabilität im Rohrbereich der einholmigen Gabel noch weiter erhöhen.

Um das Gewicht des Fahrrades möglichst gering zu halten, bestehen die Radnaben beispielsweise aus Aluminium und besitzen an ihrem inneren Umfang im Bereich der Bremselemente eine Stahlauflage, damit ein sicherer Bremsbetrieb gewährleistet und eine Beschädigung der inneren Bereiche der Radnabe durch die Bremselemente vermieden wird.

Nach einer besonders vorteilhaften Weiterbildung des erfindungsgemäßen Fahrrades können zusätzlich in der Radnabe und mit der Achslagereinrichtung fest verbunden Gebereinrichtungen zur Einschaltung eines Bremslichtes sowie zur Geschwindigkeitserfassung angeordnet sein, wobei die entsprechenden Signalübertragungsleitungen innerhalb der einholmigen Gabel bzw. des Antriebsauslegers verlaufen.

Es hat sich herausgestellt, daß ein besonders verwindungssteifer und damit sicherer sowie leicht herstellbarer Fahrradrahmen zur Aufnahme der einholmigen Gabel vorteilhaft aus mindestens vier nebeneinanderliegenden Schalen zusammengesetzt ist. Die Schalen können dabei aus Metallblech bestehen.

Durch diesen Fahrradrahmen in Verbindung mit der einholmigen Gabel wird ein besonders leichtes Fahrrad erhalten.

Vorzugsweise besteht der Vorderradrahmen aus zwei mit Durchbrüchen versehenen Innenschalen, die bereichsweise miteinander sowie mit einer rohrförmigen Halterung zur Aufnahme der einholmigen Gabel und mit 10 einem Rohrelement zur Halterung des Sattels verschweißt sind. Beide Innenschalen sind von Außenschalen bedeckt, die wenigstens bereichsweise einen Abstand von den Innenschalen aufweisen. Der Raum zwischen den Innenschalen und derjenige zwischen den Innen- und Außenschalen ist mit Hilfe eines Kunststoffs ausgeschäumt. Dieser Kunststoff kann zusätzlich zum Beispiel glasfaserverstärkt sein. Die Außenschalen können dabei erheblich dünner als die Innenschalen ausgebildet sein. Sie brauchen ferner keinen unmittelbaren Kontakt miteinander zu haben, da sie über den Kunststoff miteinander verbunden sind.

Zur Aufnahme des Antriebsauslegers ist im unteren Bereich des Fahrradrahmens eine mit dem Rohrelement fest verbundene Halteeinrichtung vorgesehen. Diese Halteeinrichtung ist als Trichter mit schräg zueinander verlaufenden Seitenwänden ausgebildet, in den ein entsprechend geformter Teil des Antriebsauslegers einziehbar ist. Im Inneren der Halteeinrichtung sind Auflaufschrägen angeordnet, auf denen Keilelemente hochlaufen, wenn sie mittels einer Schraubeinrichtung aufeinanderzu bewegt werden, wobei die Keilelemente in Öffnungen des Antriebsauslegers eingreifen und diesen mitnehmen.

Durch diese Halteeinrichtung wird eine sehr starke lösbare Verbindung zwischen dem relativ leichten Fahrradrahmen und dem im Vergleich dazu sehr massiven Antriebsausleger erhalten.

Die nachfolgende Zeichnung stellt ein Ausführungsbeispiel der Erfindung dar. Es zeigen :

Fig. 1 eine Seitenansicht des Grundelements einer einholmigen Gabel des erfindungsgemäßen Fahrrades,

Fig. 2 eine Seitenansicht auf die einholmige Gabel in Verbundkonstruktion,

Fig. 3 einen Querschnitt durch die einholmige Vorderradgabel gemäß der Linie C-C in Fig. 2,

Fig. 4 eine Prinzipdarstellung der einholmigen Gabel von vorn,

Fig. 5 einen Schnitt durch die einholmige Gabel und das von ihr getragene Fahrrad in einer die Radachse enthaltenden Ebene,

Fig. 6 einen Schnitt durch den Antriebsausleger und das Hinterrad in einer die Hinterradachse enthaltenden Ebene,

Fig. 7 einen Schnitt entsprechend der Fig.6, ergänzt um den Bereich des Fahrradantriebes,

Fig. 8 bis 13 den Fahrradrahmen sowie einige Schnitte durch den Rahmen,

Fig. 14 und 15 eine mit einem Rohrelement zur Halterung des Sattels verbundene Halteeinrichtung zur Aufnahme des Antriebsauslegers sowie einen Querschnitt durch diese Halteeinrichtung, und

Fig. 16 einen Längsschnitt durch die genannte Halteeinrichtung.

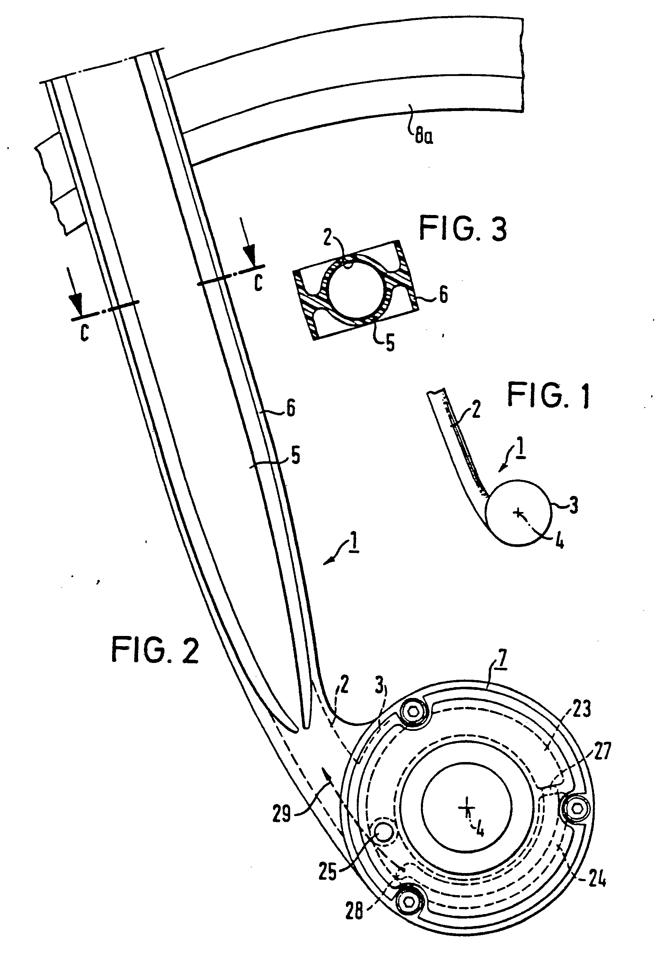

Die Fig. 1 zeigt den prinzipiellen Aufbau einer einholmigen Gabel für das erfindungsgemäße Fahrrad anhand einer Seitenansicht. Die einholmige Gabel 1 besteht aus einem Grundelement, das ein stabiles Rohr 2 und einen hohlzylindrischen Teil 3 umfaßt, der mit dem Rohr 2 fest verbunden ist. Beide Teile 2 und 3 können beispielsweise aus Stahl bestehen und fest miteinander verschweißt sein. Die Zentralachse 4 des zylindrischen Teils 3 stellt die spätere Drehachse des Fahrrades dar und verläuft im vorliegenden Fall senkrecht zur Zeichenebene. Das röhrförmige Teil 2 erstreckt sich in einer senkrecht zur Zentralachse 4 liegenden Richtung und ist an seinem unteren Ende leicht abgebogen. Es geht darüber hinaus in der Zeichenebene tangential in den zylindrischen Teil 3 über.

Das gezeigte Grundelement besitzt infolge des abgebogenen Teils des Rohres 2 federnde Eigenschaften und dient unter anderem zur Aufnahme einer Achslagereinrichtung für das Vorderrad, die im Bereich des zylindrischen Teils 3 angeordnet und von diesem gehalten wird.

Die Figur 2 zeigt eine Seitenansicht der einholmigen Gabel für das Fahrrad nach der Erfindung mit dem in Fig. 1 dargestellten Grundelement. Dieses Grundelement ist im Bereich des Rohres 2 zur Erhöhung der mechanischen Festigkeit mit einem Verstärkungsmantel 5 zum Beispiel aus Aluminium umgeben, der an gegenüberliegenden Rohrseiten in T-förmige Ansatzstücke 6 übergeht, wie Fig. 3 zeigt, die einen Schnitt entsprechend der Linie C-C in Fig. 2 darstellt. Diese Verbundkonstruktion aus Stahlrohr 2 und Aluminiummantel 5 mit Ansatzstücken 6 gewährleistet eine leichte und stabile Bauweise der genannten einholmigen Vorderradgabel.

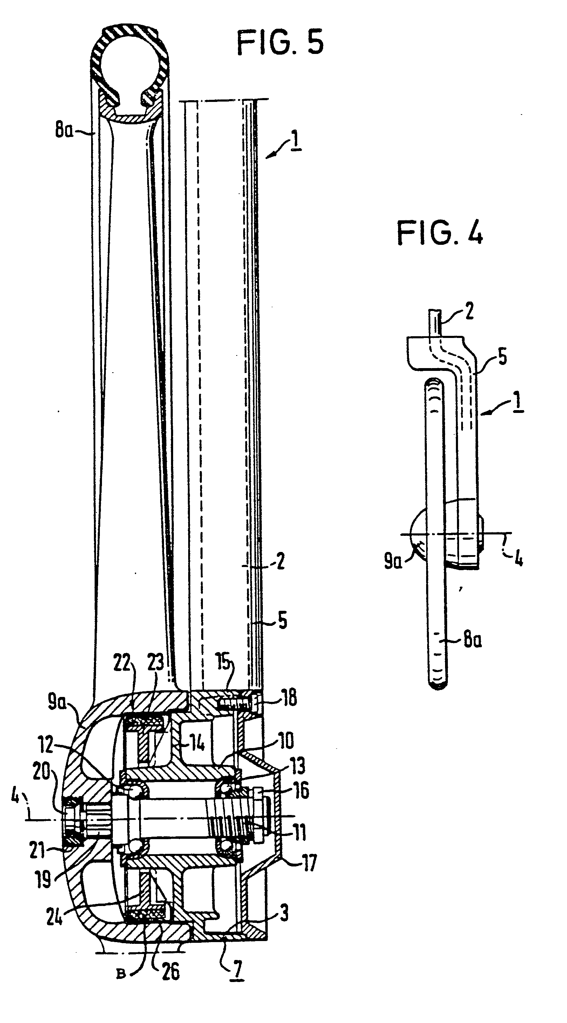

Wie in Fig. 2 weiter dargestellt ist, dient der innere Bereich des zylindrischen Teils 3 zur Aufnahme einer Achslagereinrichtung, die im Zusammenhang mit der Fig. 5 näher erläutert wird. Diese Achslagereinrichtung kann beispielsweise aus einem Aluminiumgußteil 7 bestehen, das durch den zylindrischen Teil 3 gehalten wird und mit dem Aluminiummantel 5 auf dem Rohr 2 einstückig verbunden ist. Mit dem Aluminiumgußteil 7 ist eine Bremsvorrichtung zur Abbremsung des sich um die Zentralachse 4 drehenden Vorderrades 8a fest verbunden, wie später noch im einzelnen beschrieben wird.

Die Fig. 4 zeigt den prinzipiellen Aufbau der einholmigen Vorderradgabel 1 für das Fahrrad nach der Erfindung. Sie verläuft an nur einer Seite des Vorderrades 8a und ist oberhalb des Rades so geformt, daß das Rohr 2 innerhalb der Radebene zu liegen kommt. Dieses Rohr 2 ist im Fahrradrahmen drehbar gelagert und weiterhin mit einer nicht dargestellten Lenkeinrichtung verbunden. Das Vorderrad 8a ist einseitig von der einholmigen Vorderradgabel 1 lösbar und bedeckt mit seiner Radnabe 9a die mit der einholmigen Vorderradgabel 1 verbundene Achslagereinrichtung bzw. Bremsvorrichtung.

In der Fig. 5 ist ein Schnitt durch das Vorderrad 8a und die einholmige Gabel 1 dargestellt, der in einer Ebene liegt, in der auch die Zentralachse 4 verläuft. Das vom zylindrischen Teil 3 getragene Aluminiumgußteil 7 besitzt ein rohrförmiges Element 10, in dessen Inneren eine Radachse 11 koaxial zur Zentralachse 4 mittels Lagereinrichtungen 12, 13 drehbar gelagert ist. Die Lagereinrichtungen 12, 13 sind vorzugsweise Kugellagerringe. Das rohrförmige Element 10 besitzt an seinem äußeren Umfang mittig angebracht eine radiale Flanschscheibe 14, an der ein Außenring 15 angeformt ist, welcher den zylindrischen Teil 3 außen umgreift. Die Elemente 10, 14 und 15 sind dabei, wie bereits erwähnt, einstückig miteinander und fest mit dem zylindrischen Teil 3 verbunden. Die Vorderradachse 11 ist an der dem Vorderrad 8a abgewandten Seite mit Hilfe einer Mutter 16 gegen ein Herausfallen aus dem rohrförmigen Element 10 gesichert und daher permanent mit ihm verbunden. An der selben Seite ist eine Kappe 17 vorgesehen, die den zylindrischen Teil 3 und damit die Vorderradachse 11 abdeckt. Diese Kappe 17 ist an ihrem äußeren Umfang durch Schrauben 18 in geeigneter Weise mit dem Aluminiumgußteil 7 verbunden.

Die Vorderradachse 11 besitzt auf der der Kappe 17 abgewandten Seite einen Achsansatz 19, der vielkantig und darüberhinaus konisch ausgebildet ist. Auf diesen Achsansatz 19 ist die mit dem Vorderrad 8a fest verbundene Radnabe 9a aufsteckbar. Hierzu besitzt die Radnabe 9a eine entsprechende axiale Öffnung, die passend zum Achsansatz 19 ebenfalls vielkantig und konisch ausgebildet ist. Mittels einer axialen Schraube 20 ist die Radnabe 9a mit der Vorderradachse 11 verbindbar. Durch Andrehen der axialen Schraube 20 wird die Radnabe 9a auf den Konus des Achsansatzes 19 aufgezogen, so daß dadurch eine feste Verbindung zwischen beiden Teilen erzeugt wird. Der Kopf der Schraube 20 ist vorzugsweise in einer Sackbohrung 21 der Radnabe 9a versenkbar.

Unterhalb der Radnabe 9a und vorzugsweise mit dem radialen Flansch 14 fest verbunden ist eine Bremsvorrichtung 22 angeordnet, welche zur Abbremsung des Vorderrades 8a dient. Diese Bremsvorrichtung 22 besitzt zwei halbkreisförmige und in Form eines Kreises angeordnete Bremselemente 23 und 24, die beim Bremsvorgang axial nach außen und von innen gegen die Radnabe 9a gedrückt werden. Die Bremselemente 23, 24 sind mit Bremsbelägen B belegt, die gegen eine Stahlauflage 26 gedrückt werden können, die ihnen gegenüber am inneren Umfang der Radnabe 9a angebracht ist. Die Radnabe 9a besteht vorzugsweise aus Aluminium, so daß eine vorschnelle Abnutzung durch die Stahlauflage 26 vermieden wird.

Die Fig. 2 zeigt genauer, wie die Bremselemente 23, 24 ausgebildet bzw. unterhalb der Radnabe 9a angeordnet sind. Beide Bremselemente sind um eine parallel zur Radachse verlaufende erste Achse 25 drehbar angeordnet, die mit der radialen Flanschscheibe 14 fest verbunden ist. Die Bremselemente 23, 24 sind dabei mit ihren Enden auf dieser Achse 25 gelagert. Zwischen den der Achse 25 gegenüberliegenden Enden der Bremselemente 23 und 24 ist eine zweite, ebenfalls parallel zur Radachse verlaufende Drehachse 27 angeordnet, die einen asymmetrischen Querschnitt außerhalb ihres Lagerbereichs besitzt. Gegen diese Drehachse 27 werden die entsprechenden Enden der Bremselemente 23 und 24 mittels einer nicht dargestellten Federeinrichtung gedrückt. In diesem Zustand liegen die Bremselemente 23, 24 nicht an der Stahlauflage 26 an.

Die mit einer Mutter gesicherte Drehachse 27 ist mit einem Ende eines Hebelarms 28 fest verbunden, von dessen anderem Ende ein Bowdenzug 29 oder ein anderes geeignetes Betätigungselement durch das Rohr 2 der einholmigen Gabel 1 zur Lenkeinrichtung geführt ist. Mit Hilfe eines an der Lenkeinrichtung angeordneten Bremshebels (nicht dargestellt) kann der Bowdenzug 29 angezogen werden, so daß über den Hebel 28 die Drehachse 27 gedreht wird. Dabei werden die an sie anliegenden Bremselemente 23 und 24 aufgrund des asymmetrischen Querschnitts der Drehachse 27 auseinandergedrückt, so daß sie nunmehr gegen die Stahlauflage 26 stossen und eine Bremsung des Rades 8a bewirken.

Statt einer Trommelbremse kann innerhalb der Radnabe 9a auch eine hydraulische Bremseinrichtung angeordnet sein, deren Betätigungselemente ebenfalls innerhalb der einholmigen Gabel 1 verlaufen. Dies gilt entsprechend auch für das Hinterrad, wobei dann die Betätigungselemente bzw. Kraftübertragungselemente (z. B. Druckleitungen) innerhalb des Antriebsauslegers 30 verlaufen.

Innerhalb der Radnabe 9a und mit der Achslagereinrichtung fest verbunden, können ferner Gebereinrichtungen zum Einschalten eines Bremslichtes sowie zur Geschwindigkeitserfassung angeordnet sein. Die entsprechenden Signalübertragungsleitungen (nicht dargestellt) verlaufen ebenfalls innerhalb des Rohres 2 der einholmigen Gabel 1.

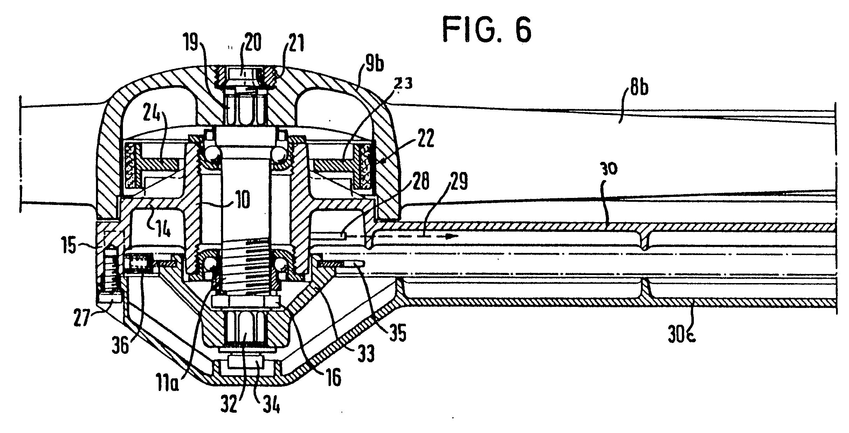

In der Fig. 6 ist ein Schnitt durch die hintere Achslagereinrichtung und das mit ihr verbundene Hinterrad 8b dargestellt. Diese hintere Achslagereinrichtung entspricht in wesentlichen Teilen der vorderen Achslagereinrichtung, so daß im folgenden nur die abweichenden Konstruktionsmerkmale beschrieben werden. Gleiche Teile sind dabei mit gleichen Bezugszeichen versehen.

Die mit dem Hinterrad fest verbundene Radnabe 9b ist auf die Hinterradachse 11a aufgesteckt, wie bereits im Zusammenhang mit der Figur 5, anhand des Vorderrades beschrieben. Rohrförmiges Element 10, radialer Flansch 14 und ringförmiger Ansatz 15 sind dabei mit dem Antriebsausleger 30 verbunden, der seinerseits vom Fahrradrahmen 31 gehalten wird. Die Räder und die vordere bzw. hintere Achslagereinrichtung sind insoweit identisch.

An dem der Hinterradnabe 9b gegenüberliegenden Ende der Hinterradachse 11a besitzt diese einen zweiten Achsansatz 32, auf dem ein hohlkegelförmiges Antriebselement 33 fest angeordnet ist. Dieses Antriebselement 33 öffnet sich in Richtung auf die Lagereinrichtung. Der zweite Achsansatz 32 kann zur Befestigung des genannten Antriebselements 33 als Vielkant und darüberhinaus zusätzlich konisch ausgebildet sein, so daß eine feste Verbindung zwischen beiden genannten Teilen erhalten wird. Zur Sicherung des Antriebselements 33 ist eine axiale Schraube 34 vorgesehen, durch die ein Herabgleiten des Antriebselements 33 vom Achsansatz 32 verhindert wird.

Das kegelförmige Antriebselement 33 trägt im Bereich seines größten Durchmessers einen koaxial zur hinteren Achse 11a angeordneten Zahnkranz 35, auf dem eine Kette 36 als Endlos-Antriebselement angeordnet ist. Antriebselement 33, Zahnkranz 35 und Kette 36 sind dabei vom hinteren Teil des Deckels 30c des Antriebsauslegers 30 abgedeckt, welcher dort mittels Schrauben 37 mit der Achslagereinrichtung verschraubt ist. Auch mit der hinteren Achslagereinrichtung ist eine Bremsvorrichtung 22 verbunden, die identisch mit der vorderen Bremsvorrichtung ist. Bei beiden Bremsvorrichtungen kann selbstverständlich vorgesehen sein, die zweite Drehachse 27 durch den Radialflansch 14 hindurchzuführen und dort mit dem Hebel 28 (Bremshebel) zu verbinden. Der Bowdenzug 29 könnte dann ohne Umlenkungen in das Rohr 2 der einholmigen Gabel 1 bzw. in den Antriebsausleger 30 einlaufen.

Auch die hintere Achslagereinrichtung kann gegebenenfalls Gebereinrichtungen für Bremslicht und Geschwindigkeitserfassung enthalten, deren Verbindungsleitungen ebenfalls durch den Antriebsausleger 30 laufen.

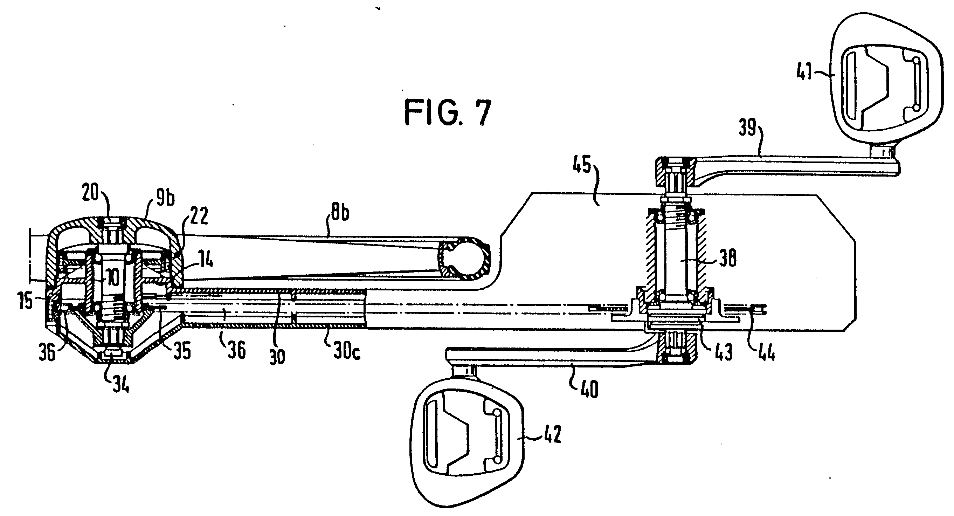

Der Antriebsausleger mit der hinteren Achslagereinrichtung und dem Hinterrad 8b ist in Fig. 7 genauer dargestellt. Er nimmt in seinem vorderen Bereich die Antriebseinrichtung für das Fahrrad auf, die aus einer drehbar gelagerten Welle 38 besteht, an deren Enden über Hebelarme 39, 40 Pedalen 41 und 42 angeordnet sind. Auf einer Freilaufnabe 43, die auf der Welle 38 ruht, ist ein Zahnkranz oder ein anderes geeignetes Ketten-Antriebselement 44, welches vorliegend nur schematisch dargestellt ist, angeordnet, auf dem die Kette 36 ebenfalls ruht. Die Antriebseinrichtung für das Fahrrad ist von einem Schutzgehäuse 45 hermetisch umschlossen, das mit zum Antriebsausleger 30 gehört.

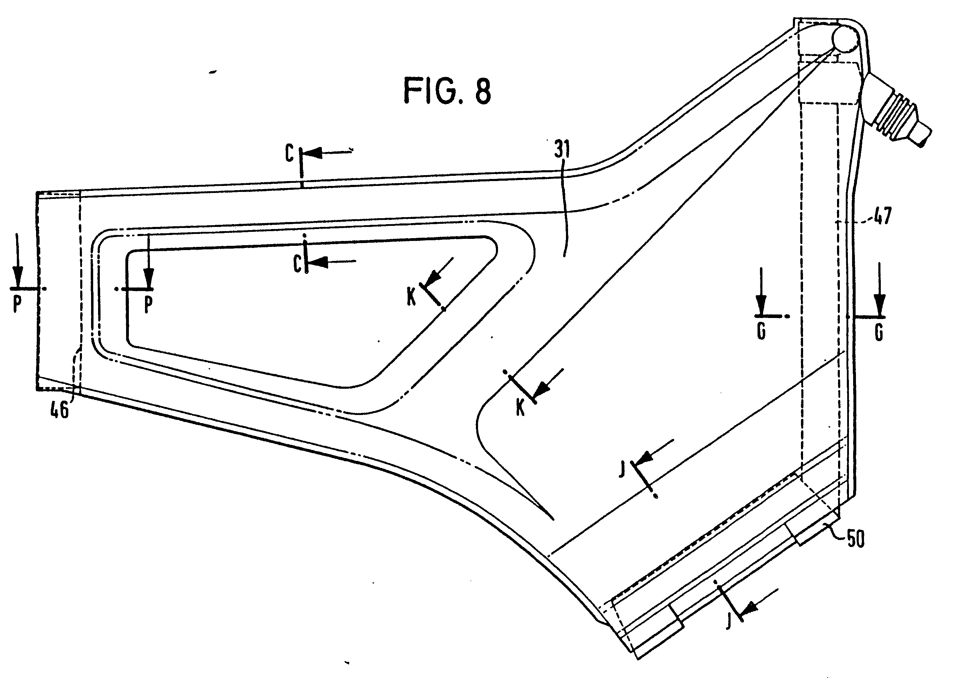

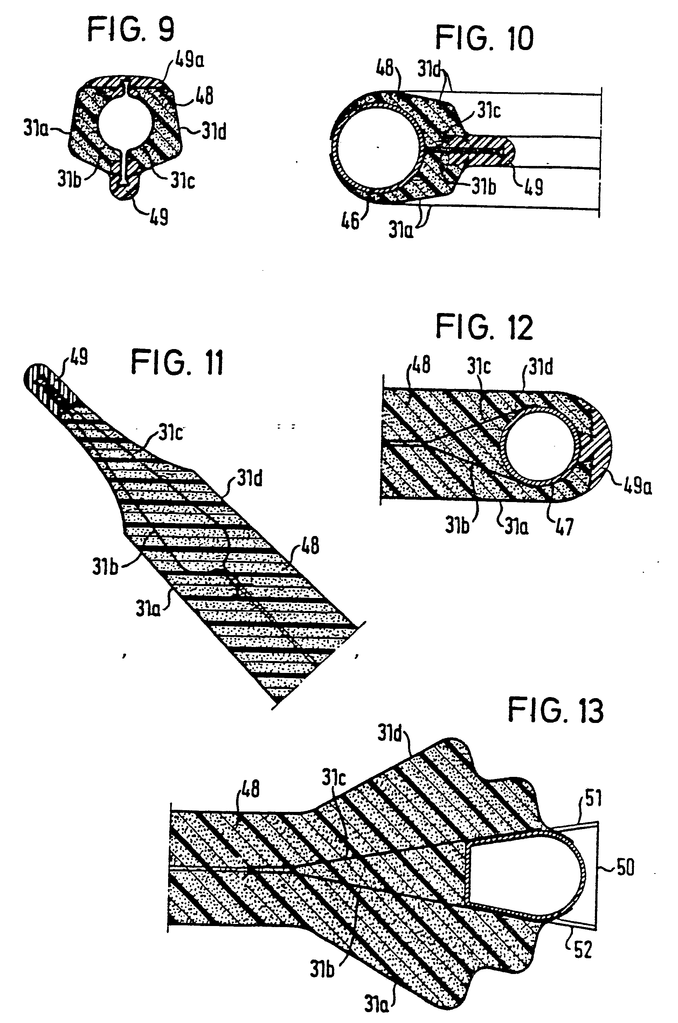

Der Antriebsausleger 30 ist über eine Halteeinrichtung, die noch genauer beschrieben wird, mit dem Fahrradrahmen 31 verbunden, der in Fig. 8 dargestellt ist. Dieser Fahrradrahmen 31 ist aus vier nebeneinanderliegenden Schalen 31a, 31b, 31c und 31d zusammengesetzt, die vorzugsweise aus Metall bestehen. Dabei können die äußeren beiden Schalen dünner als die beiden inneren Schalen sein. Die Figuren 9 bis 13 zeigen verschiedene Schnitte durch den Fahrradrahmen 31 an den Stellen C-C, P-P, K-K, G-G und J-J. Die beiden mit Durchbrüchen versehenen Innenschalen 31b und 31c sind bereichsweise miteinander sowie mit einer rohrförmigen Halterung 46 zur Aufnahme der einholmigen Gabel 1 und mit einem Rohrelement 47 zur Halterung des Sattels (nicht dargestellt) verschweißt. Die Innenschalen 31b, 31c sind von den Außenschalen 31a, 31d bedeckt, die wenigstens bereichsweise einen Abstand von den Innenschalen aufweisen, wobei der Raum zwischen den Innenschalen 31b, 31c und derjenige zwischen den Innen- und Außenschalen bzw. zwischen den Außenschalen mit Hilfe eines Kunststoffes 48 ausgeschäumt ist. Der Kunststoff kann zusätzlich glasfaserverstärkt sein. Gegebenenfalls können Kanten der vier genannten Schalen mit Umhüllungen 49, 49a versehen sein.

Durch eine derartige Bauweise wird ein sehr verwindungssteifer Fahrradrahmen erhalten, wie er vorteilhaft im Zusammenhang mit einer einholmigen Vorderradgabel verwendet werden kann.

Wie bereits in Fig. 8 angedeutet, ist am unteren Ende des Fahrradrahmens 31 eine Halteeinrichtung 50 zur Aufnahme des Antriebsauslegers 30 angeordnet. Diese Halteeinrichtung 50 ist fest mit dem Rohrelement 47 zur Aufnahme des Sattels verbunden, zum Beispiel verschweißt. Die Fig. 13 zeigt einen Querschnitt entsprechend der Linie J-J in Fig. 8, so daß erkennbar ist, in welcher Weise die Halteeinrichtung 50 mit dem Fahrradrahmen 31 verbunden ist. Diese Halteeinrichtung 50 besitzt trichterförmig zueinander verlaufende Seitenwände 51, 52, die mit den inneren Schalen 31b, 31c des Fahrradrahmens 31 fest verbunden sind. Die äußeren Schalen 31a, 31d sind in diesem Bereich aufgeweitet und verlaufen dann wellenförmig auf die genannten Seitenwände 51, 52 zu. Sie sind ebenfalls fest mit der Halteeinrichtung 50 verbunden. Da der Raum zwischen den einzelnen Schalen ausgeschäumt ist, ergibt sich durch die besondere Formgebung der Innen- und Außenschalen in diesem Bereich ein sehr stabiler Rahmenabschnitt.

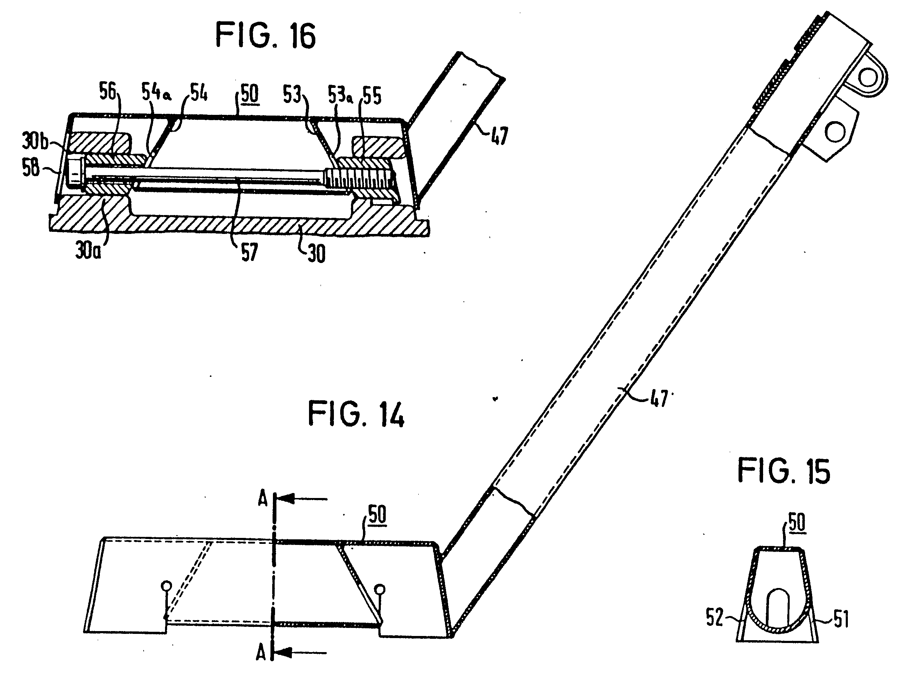

Der Antriebsausleger 30 besitzt oberhalb der Antriebseinrichtung für das Fahrrad (38, 43, 44) einen geeignet geformten Ansatz, der in die trichterförmige Öffnung der Halteeinrichtung 50 einziehbar ist. Dieser Ansatz 30a besitzt ebenfalls keilförmig zueinander verlaufende Seitenwände, die im Verbundzustand mit dem Fahrradrahmen 31 an den Seitenwänden 51 und 52 der Halteeinrichtung 50 zu liegen kommen. In den Figuren 14 und 15 ist die Halteeinrichtung 50 zusammen mit dem Rohrelement 47 nochmals getrennt vom Fahrradrahmen 31 dargestellt. Die Fig. 16 zeigt einen Längsschnitt durch diese Halteeinrichtung 50. Sie besitzt im Inneren zwei mit Bohrungen 53a, 54a versehene Auflaufschrägen 53, 54, die praktisch rechtwinklig zu den Seitenwänden 51, 52 verlaufen. Auf diesen Auflaufschrägen 53, 54 laufen keilförmige Elemente 55, 56 hoch, wenn sie mittels einer Schraubeinrichtung aufeinanderzubewegt werden. Die keilförmigen Elemente 55, 56 sind dabei innerhalb einer Bohrung im Ansatz 30a des Antriebsauslegers 30 positioniert, so daß sie diesen Ansatz 30a in die trichterförmige Öffnung der Halteeinrichtung 50 hineinziehen. Auf diese Weise wird eine starke lösbare Verbindung zwischen dem relativ massiven Antriebsausleger 30 und dem Fahrradrahmen 31 erhalten. Die Schraubeinrichtung besteht aus einer Schraube 57, die ein Keilelement 56 frei durchsetzt und in das andere Keilelement 55 einschraubbar ist. Dabei liegt die Schraube 57 in der Bohrung 30b des keilförmigen Ansatzes 30a und verläuft außerdem durch die Öffnungen 51 und 52 in den Auflaufschrägen 53 und 54. Um die Schraube 57 drehen zu können, ist in der Stirnseite der Halteeinrichtung 50, die dem Rohrelement 47 gegenüberliegt, eine Öffnung 58 vorgesehen.

**Patentansprüche**

1. Fahrrad mit
— einem Fahrradrahmen (31),
— identischem Vorder- (8a) und Hinterrad (8b),
— einer mit dem Fahrradrahmen (31) drehbar verbundenen Vorderradhalterung zur drehbaren Lagerung einer Vorderradachse (11), auf die das Vorderrad (8a) aufsetzbar ist,
— einem mit dem Fahrradrahmen verbundenen einarmigen Antriebsausleger (30), der an seinem hinteren Ende eine mit ihm fest verbundene und drehbar gelagerte sowie mittels einer Antriebseinrichtung (33, 35, 36) antreibbare Hinterradachse (11a) aufweist, auf die von einer Seite her das Hinterrad (8b) aufsetzbar ist, sowie mit
— einer Bremsvorrichtung, dadurch gekennzeichnet, daß
— die mit dem Fahrradrahmen (31) verbundene Vorderradhalterung als einholmige Gabel (1) ausgebildet ist,
— die Vorderradachse (11) fest und zur einseitigen Aufnahme des Vorderrades (8a) mit der einholmigen Gabel (1) verbunden ist,
— die Räder (8a, 8b) halbschalenförmig ausgebildete und zu den Achslagereinrichtungen (10, 12-14) hin offene Radnaben (9a, 9b) besitzen, und daß
— wenigstens innerhalb einer halbschalenförmigen Radnabe (9a, 9b) eine mit der Achslagereinrichtung fest verbundene Bremsvorrichtung (22) angeordnet ist, welche zum Bremsen des Fahrrades an die innere Umfangsfläche der Radnabe (9a, 9b) andrückbar ist.

2. Fahrrad nach Anspruch 1, dadurch gekennzeichnet, daß die Radnaben (9a, 9b) eine axiale Öffnung zum Aufstecken der Räder (8a, 8b) auf einen Achsansatz (19) besitzen, und daß die Räder mittels nur einer axial in die Radachse (11, 11a) eindrehbaren Schraube (20) gesichert sind.

3. Fahrrad nach Anspruch 2, dadurch gekennzeichnet, daß Achsansatz (19) und axiale Öffnung vielkantig ausgebildet sind.

4. Fahrrad nach Anspruch 3, dadurch gekennzeichnet, daß Achsansatz (19) und axiale Öffnung konisch ausgebildet sind.

5. Fahrrad nach Anspruch 1 oder einem der folgenden, dadurch gekennzeichnet, daß in den Radnaben (9a, 9b) beider Räder (8a, 8b) Bremsvorrichtungen (22) angeordnet sind.

6. Fahrrad nach Anspruch 5, dadurch gekennzeichnet, daß die Achslagereinrichtungen (10, 12-14) und die Bremsvorrichtungen (22) für Vorder- und Hinterrad (8a, 8b) identisch sind.

7. Fahrrad nach Anspruch 6, dadurch gekennzeichnet, daß jeweils eine Achslagereinrichtung aus einem rohrförmigen Element (10) besteht, in dessen Inneren eine Radachse (11, 11a) über wenigstens zwei Kugellagerringe (12, 13) drehbar gelagert ist, daß das rohrförmige Element an seinem äußeren Umfang über eine radiale Flanschscheibe (14) mit der einholmigen Gabel (1) bzw. dem Antriebsausleger (30) verbunden ist, und daß die Bremsvorrichtung (22) an der dem Rad zugewandten Seite der Flanschscheibe (14) angeordnet ist.

8. Fahrrad nach Anspruch 7, dadurch gekennzeichnet, daß die Bremsvorrichtung (22) zwei halbkreisförmige und in Form eines Kreises angeordnete Bremselemente (23, 24) besitzt, daß eine parallel zur Radachse (11, 11a) verlaufende erste Achse (25) mit der radialen Flanschscheibe (14) fest verbunden ist, daß die Bremselemente mit ihren Enden auf der ersten Achse (25) drehbar gelagert sind, daß im gegenüberliegenden Endbereich der Bremselemente zwischen diesen eine zweite, parallel zur Radachse (11, 11a) liegende Drehachse (27) angeordnet ist, die einen asymmetrischen Querschnitt besitzt, und daß die zweite Drehachse (27) fest mit einem über einen Seilzug (29) betätigbaren Hebel (28) verbunden ist, um die Bremselemente entgegen einer Federkraft durch Drehung der zweiten Drehachse (27) zu spreizen.

9. Fahrrad nach Anspruch 8, dadurch gekennzeichnet, daß der Seilzug (29) für die Vorderradbremse im Innern der einholmigen Gabel (1) verläuft.

10. Fahrrad nach einem der Ansprüche 1 bis 7, dadurch gekennzeichnet, daß die Bremsvorrichtung (22) eine hydraulische Bremseinrichtung ist, deren Betätigungselemente im Innern der einholmigen Gabel (1) bzw. des Antriebsauslegers (30) verlaufen.

11. Fahrrad nach einem oder mehreren der Ansprüche 1 bis 10, dadurch gekennzeichnet, daß die einholmige Gabel (1) aus einem im Radachsenbereich leicht abgebogenem Stahlrohr (2) besteht, an dessen unterem Ende ein Stahlzylinder (3) angeschweißt ist, um dessen Zylinderachse (4) sich das Vorderrad (8a) dreht.

12. Fahrrad nach Anspruch 11, dadurch gekennzeichnet, daß der Stahlzylinder (3) die Achslagereinrichtungen (10, 12-15) trägt.

13. Fahrrad nach Anspruch 12, dadurch gekennzeichnet, daß die Achslagereinrichtungen (10, 12-15) aus gegossenem Aluminium bestehen.

14. Fahrrad nach Anspruch 11, dadurch gekennzeichnet, daß das Stahlrohr (2) mit einem Aluminiummantel (5) umgeben ist, der an gegenüberliegenden Rohrseiten in T-förmige Ansatzstücke (6) übergeht.

15. Fahrrad nach Anspruch 1 oder einem der folgenden, dadurch gekennzeichnet, daß die Radnaben (9a, 9b) aus Aluminium bestehen.

16. Fahrrad nach Anspruch 15, dadurch gekennzeichnet, daß die Radnaben (9a, 9b) an ihrem inneren Umfang im Bereich der Bremselemente (23, 24) eine Stahlauflage (26) tragen.

17. Fahrrad nach Anspruch 1 oder einem der folgenden, dadurch gekennzeichnet, daß zusätzlich in der Radnabe (9a, 9b) und mit der Achslagereinrichtung fest verbunden Gebereinrichtungen zur Einschaltung eines Bremslichtes sowie zur Geschwindigkeitserfassung angeordnet sind, wobei die entsprechenden Signalübertragungsleitungen innerhalb der einholmigen Gabel (1) bzw. des Antriebsauslegers (30) verlaufen.

18. Fahrrad nach Anspruch 1 oder einem der folgenden, dadurch gekennzeichnet, daß der Fahrradrahmen (31) aus mindestens vier nebeneinanderliegenden Schalen (31a, 31b, 31c, 31d) zusammengesetzt ist.

19. Fahrrad nach Anspruch 18, dadurch gekennzeichnet, daß die Schalen (31a, 31b, 31c, 31d) aus Metallblech bestehen.

20. Fahrrad nach Anspruch 19, dadurch gekennzeichnet, daß zwei mit Durchbrüchen versehene Innenschalen (31b, 31c) bereichsweise miteinander sowie mit einer rohrförmigen Halterung (46) zur Aufnahme der einholmigen Gabel (1) und mit einem Rohrelement (47) zur Halterung des Sattels verschweißt sind, daß beide Innenschalen (31b, 31c) von Außenschalen (31a, 31d) bedeckt sind, die wenigstens bereichsweise einen Abstand von den Innenschalen aufweisen, und daß der Raum zwischen den Innenschalen und derjenige zwischen der Innen- und Außenschalen mit Hilfe eines Kunststoffes (48) ausgeschäumt ist.

21. Fahrrad nach Anspruch 20, dadurch gekennzeichnet, daß der Kunststoff (48) glasfaserverstärkt ist.

22. Fahrrad nach Anspruch 20 oder 21, dadurch gekennzeichnet daß der Fahrradrahmen (31) im unteren Bereich eine mit dem Rohrelement (47) fest verbundene Halteeinrichtung (50) zur Aufnahme des Antriebsauslegers (30) aufnimmt.

23. Fahrrad nach Anspruch 22, dadurch gekennzeichnet, daß die Halteeinrichtung (50) als Trichter mit schräg zueinander verlaufenden Seitenwänden (51, 52) ausgebildet ist, in den ein entsprechend geformter Teil (30a) des Antriebsauslegers (30) einziehbar ist.

24. Fahrrad nach Anspruch 23, dadurch gekennzeichnet, daß im Innern der Halteeinrichtung (50) Auflaufschrägen (53, 54) angeordnet sind, auf denen Keilelemente (55, 56) hochlaufen, wenn sie mittels einer Schraubeinrichtung (57) aufeinanderzubewegt werden, und daß die Keilelemente in Öffnungen (30b) des Antriebsauslegers (30) eingreifen und diesen mitnehmen.

**Claims**

1. A bicycle comprising :
— a frame (31),
— identical front and rear wheels (8a, 8b),
— a holder rotatably connected to the frame (31) for rotatably bearing an axle (11) on which the front wheel (8a) can be mounted,
— a one-armed longitudinal drive member (30) connected to the frame and at its rear end having an axle (11a) firmly connected thereto and rotatably mounted and drivable by a drive device (33, 35, 36) and on which the back wheel (8b) can be mounted from one side, and
— a brake device, characterised in that
— the front wheel holder connected to the frame (31) is a one-legged fork (1),
— the axle (11) is permanently connected to the fork (1) for receiving the front wheel (8a) on one side,
— the wheels (8a, 8b) have hubs (9a, 9b) in the form of half-shells and open towards the axle-bearing devices (10, 12-14), and
— a brake device (22) permanently connected to the axle-bearing device is disposed inside at least one half-shell hub (9a), (9b) and can be pressed against the inner periphery of the hub (9a, 9b) for braking the bicycle.

2. A bicycle according to claim 1, characterised in that the hubs (9a, 9b) have an axle opening for fitting the wheels (8a, 8b) on an axle projection (19), and the wheels are secured by only one screw (20) which can be screwed into the axle (11, 11a).

3. A bicycle according to claim 2, characterised in that the axle projection (19) and the axle opening are polygonal.

4. A bicycle according to claim 3, characterised in that the axle projection (19) and the axle opening are conical.

5. A bicycle according to claim 1 or one of the following claims, characterised in that brake devices (22) are disposed in the hubs (9a, 9b) of both wheels (8a, 8b).

6. A bicycle according to claim 5, characterised in that the axle-bearing devices (10, 12-14) and the brake devices (22) for front and back wheels (8a, 8b) are identical.

7. A bicycle according to claim 6, characterised in that each axle-bearing device comprises a tubular element (10) containing an axle (11, 11a) rotatably mounted on at least two ball races (12, 13), the outer periphery of the tubular element is connected by a radial flanged disc (14) to the one-legged fork (1) or the longitudinal drive member (30), and the brake device (22) is disposed on the side of the flanged disc (14) facing the wheel.

8. A bicycle according to claim 7, characterised in that the brake device (22) comprises two semicircular brake elements (23, 24) disposed in a circle, a first pivot extending parallel to the axle (11, 11a) is permanently connected to the radial flanged disc (14), the ends of the brake elements are rotatably mounted on the first pivot (25), a second pivot (27) parallel to the axle (11, 11a) and having an asymmetrical cross-section is disposed between the brake elements at the opposite end thereof, and the second pivot (27) is permanently connected to a lever (28) actuated via a cable (29), in order to force the brake elements apart against spring pressure by rotating the second pivot (27).

9. A bicycle according to claim 8, characterised in that the cable (29) for the front-wheel brake extends inside the one-legged fork (1).

10. A bicycle according to any of the claims 1 to 7, characterised in that the brake device (22) is hydraulic and its actuating elements extend inside the fork (1) or the longitudinal drive member (30).

11. A bicycle according to one or more of claims 1 to 10, characterised in that the fork (1) comprises a steel tube bent slightly near the axle and welded at its bottom end to a steel cylinder (3) having an axis 4 around which the front wheel (8a) turns.

12. A bicycle according to claim 11, characterised in that the steel cylinder (3) bears the axle-bearing devices (10, 12-15).

13. A bicycle according to claim 12, characterised in that the axle-bearing devices (10, 12-15) are made of cast aluminium.

14. A bicycle according to claim 11, characterised in that the steel tube (12) is surrounded by an aluminium jacket (15) which merges into T-shaped connecting members (6) at opposite ends of the tube.

15. A bicycle according to claim 1 or one of the following claims, characterised in that the hubs (9a, 9b) are of aluminium.

16. A bicycle according to claim 15, characterised in that the hubs (9a, 9b) bear a steel covering (26) on their inner periphery near the brake elements (23, 24).

17. A bicycle according to claim 1 or one of the following claims, characterised in that pick-up devices permanently connected to the axle-bearing device are also disposed in the hub (9a, 9b) for switching on a brake light and for measuring the speed, the corresponding signal transmission lines extending inside the fork (1) or the drive member (30).

18. A bicycle according to claim 1 or one of the following claims, characterised in that the frame (31) is put together from at least four adjacent shells (31a, 31b, 31c, 31d).

19. A bicycle according to claim 18, characterised in that the shells (31a, 31b, 31c, 31d) are made of sheet metal.

20. A bicycle according to claim 19, characterised in that the inner shells (31b, 31c) are formed with apertures and are connected at places to one another and to a tubular holder (46) for receiving the fork (1) and are also welded to a tube element (47) for holding the saddle, the two inner shells (31b, 31c) are covered by outer shells (31a, 31d), at least parts of which are spaced apart from the inner shells, and the space between the inner shells and the space between the inner and outer shells is filled with a foam plastics (48).

21. A bicycle according to claim 20, characterised in that the plastics (48) is glass-fibre reinforced.

22. A bicycle according to claim 20 or 21, characterised in that the lower part of the frame (31) receives a holder (50) permanently connected to the tube element (47) and for receiving the drive member (30).

23. A bicycle according to claim 22, characterised in that the holder (50) is a funnel having side walls (51, 52) approaching one another at an angle, and into which a correspondingly shaped part (30a) of the drive member (30) can be pulled.

24. A bicycle according to claim 23, characterised in that ramps (53, 54) are disposed inside the holder and wedge elements (55, 56) run up them when they are moved towards one another by a screw device (57), and the wedge elements engage in openings (30b) of the drive member (30) and entrain it.


**Revendications**

1. Bicyclette comprenant :
— un cadre de bicyclette (31) ;
— une roue avant (8a) et une roue arrière (8b), identiques ;
— un support de roue avant, relié de façon pivotante au cadre de bicyclette (31), pour supporter, avec possibilité de rotation, un axe (11) de roue avant, sur lequel la roue avant (8a) peut se placer ;
— une poutre d'entraînement (30) à un bras, reliée audit cadre, laquelle comporte, à son extrémité arrière, un axe de roue arrière (11a) qui est lié solidairement à la flèche et qui est monté de façon à pouvoir tourner en pouvant être entraîné par l'intermédiaire d'un dispositif d'entraînement (33, 35, 36), la roue arrière (8b) pouvant être placée sur son axe à partir d'un côté, ainsi que :
— un dispositif de freinage, caractérisée en ce que le support de roue avant relié au cadre de bicyclette (31) est constitué sous forme d'une fourche (1) à un seul bras ;
— l'axe de roue avant (11) est relié solidairement à la fourche (1) à un seul bras et de façon à recevoir la roue avant (8a) d'un côté ;
— les roues (8a, 8b) comportent des moyeux (9a, 9b) en forme de demi-coquille, ouvertes en direction des dispositifs paliers d'axes (10, 12 à 14), et en ce que, un dispositif de freinage (22), relié solidairement au dispositif à palier, est disposé au moins à l'intérieur d'un moyeu de roue (9a, 9b) en forme de demi-coquille, ce dispositif de freinage pouvant être serré contre la surface périphérique intérieure du moyeu de roue (9a, 9b) pour freiner la bicyclette.

2. Bicyclette selon la revendication 1, caractérisée en ce que les moyeux de roue (9a, 9b) comportent une ouverture axiale pour fixer les roues (8a, 8b) sur un bout d'axe (19) et en ce que les roues sont verrouillées seulement au moyen d'une vis (20) pouvant tourner axialement vers l'intérieur dans l'axe de roue (11, 11a).

3. Bicyclette selon la revendication 2, caractérisée en ce que le bout d'axe (19) et l'ouverture axiale ont une section polygonale.

4. Bicyclette selon la revendication 3, caractérisée en ce que le bout d'axe (19) et l'ouverture axiale ont une forme conique.

5. Bicyclette selon la revendication 1 ou l'une des suivantes, caractérisée en ce que des dispositifs de freinage (22) sont disposés dans les moyeux (9a, 9b) des deux roues.

6. Bicyclette selon la revendication 5, caractérisée en ce que les dispositifs à paliers (10, 12 à 14) et les dispositifs de freinage (22) sont identiques pour la roue avant et pour la roue arrière.

7. Bicyclette selon la revendication 6, caractérisée en ce que chaque dispositif à palier est constitué par un élément tubulaire (10) dans l'intérieur duquel est monté à rotation un axe de roue (11, 11a) par l'intermédiaire d'au moins deux roulements à billes (12, 13), en ce que l'élément tubulaire est relié à sa périphérie extérieure, par l'intermédiaire d'un flasque (14), à la fourche (1) à un seul bras ou à la poutre d'entraînement (30) et en ce que le dispositif de freinage (22) est disposé du côté du flasque (14) qui est tourné vers la roue.

8. Bicyclette selon la revendication 7, caractérisée en ce que le dispositif de freinage (22) comporte deux éléments de freinage (23, 24) semi-circulaires formant un cercle, en ce qu'un premier axe (25) dirigé parallèlement à l'axe de roue (11, 11a) est relié solidairement avec le flasque (14) radial, en ce que les éléments de freinage sont montés à rotation par leurs extrémités sur ce premier axe (25), en ce qu'un deuxième axe rotatif (27), à section transversale asymétrique, qui est parallèle à l'axe de roue (11, 11a), est disposé dans la région de l'extrémité opposée des éléments de freinage et entre celles-ci, et en ce que le deuxième axe rotatif (27) est relié solidairement à un levier (28) pouvant être actionné par une commande par câble (29) afin d'écarter les éléments de freinage, en opposition à la force d'un ressort, par rotation du deuxième axe de rotation (27).

9. Bicyclette selon la revendication 8, caractérisée en ce que la commande par câble (29) du frein de roue avant passe dans l'intérieur de la fourche (1) à un seul bras.

10. Bicyclette selon l'une des revendications 1 à 7, caractérisée en ce que le dispositif de freinage (22) est un dispositif de freinage hydraulique, dont les éléments d'actionnement passent dans l'intérieur de la fourche (1) à un seul bras ou de la poutre d'entraînement (30).

11. Bicyclette selon une ou plusieurs des revendications 1 à 10, caractérisée en ce que la fourche (1) à un bras est constituée par un tube d'acier (2) légèrement coudé dans la région de l'axe de la roue et à l'extrémité inférieure duquel est soudé un cylindre d'acier (3), la roue avant (8a) tournant autour de l'axe (4) de ce cylindre.

12. Bicyclette selon la revendication 11, caractérisée en ce que le cylindre d'acier (3) porte les dispositifs à paliers (10, 12 à 15) de l'axe.

13. Bicyclette selon la revendication 12, caractérisée en ce que les dispositifs à paliers (10, 12 à 15) de l'axe sont en aluminium coulé.

14. Bicyclette selon la revendication 11, caractérisée en ce que le tube d'acier (2) est entouré par une enveloppe (5) en aluminium, qui se raccorde, aux côtés opposés du tube, à des appendices (6) en forme de T.

15. Bicyclette selon la revendication 1 ou l'une des suivantes, caractérisée en ce que les moyeux de roue (9a, 9b) sont en aluminium.

16. Bicyclette selon la revendication 15, caractérisée en ce que les moyeux de roue (9a, 9b) portent, dans la région des éléments de freinage (23, 24) et à leur périphérie intérieure, un placage d'acier (26).

17. Bicyclette selon la revendication 1 ou l'une des suivantes, caractérisée en ce que des dispositifs indicateurs sont disposés en supplément dans le moyeu de roue et solidairement liés au dispositif palier d'axe, pour brancher un « stop » lumineux de freinage et/ou un tachymètre, les connexions de transmission des signaux correspondants passant à l'intérieur de la fourche (1) à un seul bras et de la poutre d'entraînement (30).

18. Bicyclette selon la revendication 1 ou l'une des suivantes, caractérisée en ce que le cadre de bicyclette (31) est constitué par au moins quatre coques (31a, 31b, 31c, 31d) situées les unes à côté des autres.

19. Bicyclette selon la revendication 18, caractérisée en ce que les coques (31a, 31b, 31c, 31d) sont en tôle métallique.

20. Bicyclette selon la revendication 19 caractérisée en ce que deux coques intérieures (31b, 31c) évidées sont soudées entre elles par zones ainsi qu'avec un support tubulaire (46) pour recevoir la fourche (1) à un seul bras et avec un élément tubulaire (47) pour supporter la salle, en ce que les deux coques intérieures (31b, 31c) sont couvertes par des coques extérieures (31a, 31d) qui présentent, au moins par zones, un certain écartement par rapport aux coques intérieures, et en ce que l'espace compris entre les coques intérieures et celui entre les coques intérieures et extérieures est garni de mousse de matière synthétique (48).

21. Bicyclette selon la revendication 20, caractérisée en ce que la matière synthétique (48) est renforcée par des fibres de verre.

22. Bicyclette selon la revendication 20 ou 21, caractérisée en ce que le cadre de bicyclette (31) est pourvu, dans sa région inférieure, d'un dispositif support (50) lié solidairement à l'élément tubulaire (47) pour recevoir la poutre d'entraînement (30),

23. Bicyclette selon la revendication 22, caractérisée en ce que le dispositif support (50) a une forme d'entonnoir comportant des parois latérales (51, 52) inclinées relativement les unes par rapport aux autres, dans lequel une partie (30a) de forme correspondante de la poutre d'entraînement (30) peut s'introduire.

24. Bicyclette selon la revendication 23, caractérisée en ce que des surfaces d'appui obliques (53, 54) sont disposées dans l'intérieur du dispositif support (50), des éléments en coin (55, 56) coulissent sur ces surfaces obliques lorsqu'ils sont mûs l'un vers l'autre au moyen d'un dispositif à vis (57), et en ce que les éléments en coin passent dans des ouvertures (30b) de la poutre d'entraînement (30) et la maintiennent.

FIG. 3

FIG. 1

FIG. 2

0 187 170

FIG. 5

FIG. 4

8a

1

2

5

9a

4

8a

22 23

15

9a

18

12

14

10

20

13

4

16

21

11

19

17

24

3

B

26

7

FIG. 6

FIG. 7

0 187 170

FIG. 8

0 187 170

FIG. 9

FIG. 10

FIG. 11

FIG. 12

FIG. 13

# FIG. 16

# FIG. 14

# FIG. 15

0 187 170